# EUROPEAN PATENT APPLICATION

(11) **EP 4 752 556 A1**
(43) Date of publication of application: **03.06.2026**
(21) Application number: 24856816.4
(22) Date of filing: 21.08.2024
(51) Int. Cl.: G01N 35/00, G01N 35/10

(54) **CARTRIDGE AND ANALYTE INSPECTION APPARATUS INCLUDING SAME**

(30) Priority: 21.08.2023 KR 20230109165
(71) Applicant: Aligned Genetics, Inc., Gyeonggi-do 14055 (KR)
(72) Inventor: KOH, Ghun, Anyang-si Gyeonggi-do 14051 (KR); JUNG, Neoncheol, Anyang-si Gyeonggi-do 14102 (KR)
(74) Representative: BCKIP Part mbB
(86) International application number: PCT/KR2024/012460
(87) International publication number: WO 2025/042205

(57) **Abstract**

The present disclosure relates to a cartridge and an analyte inspection apparatus including the same. Specifically, according to an embodiment of the present disclosure, a cartridge and an analyte inspection apparatus including the same may be provided, the cartridge comprising: a plurality of inspection chambers to provide a space in which a reaction solution is accommodated; a supply channel to provide a passage for the reaction solution supplied from an external source to flow to the plurality of inspection chambers; and a plurality of resistance channels through which the reaction solution discharged from the plurality of inspection chambers flows, wherein the plurality of resistance channels are respectively connected to the plurality of inspection chambers to allow gas inside the inspection chambers to be discharged to the outside, and a second resistance value which is the sum of the resistance values of the plurality of resistance channels is greater than a first resistance value which is the sum of resistance values of the supply channel and the plurality of inspection chambers.

## Description

### TECHNICAL FIELD

The present disclosure relates to a cartridge and an analyte inspection apparatus including the same.

### BACKGROUND OF THE INVENTION

Generally, a sample collected from the body of a human or an animal may be purified in a laboratory, after which a predefined inspection is conducted. When purifying in a laboratory, the sample is generally pre-treated or purified by chemical and physical methods using a specific apparatus, and a user may finally collect the thus purified sample to conduct a predefined inspection. As one such inspection method, there is the polymerase chain reaction (PCR) to determine the presence or absence of a specific nucleic acid present in a sample, and the polymerase chain reaction is widely used in the field. The PCR is performed in three main steps: denaturation, annealing, and extension. In the denaturation step, the reaction is performed at a relatively high temperature of about 95 degrees Celsius. Furthermore, the annealing and extension steps may be performed at a lower temperature of 72 degrees Celsius or less.

Recently, the rapid derivation of inspection results has become essential for diagnosing bacterial and viral infections, and for this purpose, cartridge devices in which nucleic acid extraction, gene amplification, and detection processes are integrated have been used. Furthermore, the cartridge device may be provided with a plurality of inspection chambers into which a reaction solution is dispensed so that a number of tests on a single sample may be performed simultaneously. Into these plurality of inspection chambers, a sample of an essentially identical volume is required to be dispensed.

In this regard, conventionally, a method of designing the channels such that the resistance of the fluid to each branched channel is identical by dividing a supply channel that supplies a sample has been used. However, this method has disadvantages in that it requires a large space for disposing multi-layered dispensed channels within the cartridge, requires a large amount of sample to fill all the branched channels, and if the internal flow rates between the channels vary slightly due to an imperfect manufacturing process, the sample is not uniformly filled into each branched channel, contrary to the design. This issue has arisen as a disadvantage.

As such, when performing independent PCR reactions in a plurality of inspection chambers where the dispensed sample is inspected, if the sample is not uniformly filled into each inspection chamber, it is difficult to trust the results of the PCR inspection. Therefore, there is a growing need for a cartridge and an analyte inspection apparatus including the same to uniformly dispense an equal amount of the sample from a supply channel to each inspection chamber, while eliminating unnecessary flow path structures or external devices.

### DETAISED DESCRIPTION OF INVENTION

### TECHNICAL PROBLEMS

Embodiments of the present disclosure provide a cartridge and an analyte inspection apparatus that may uniformly dispense a sample, introduced from an external source into a supply channel, into a plurality of first inspection chambers and second inspection chambers.

### TECHNICAL SOLUTION

A cartridge according to an aspect of the present disclosure may include: a plurality of inspection chambers to provide a space in which a reaction solution is accommodated; a supply channel to provide a passage for the reaction solution supplied from an external source to flow into the plurality of inspection chambers; and a plurality of resistance channels through which the reaction solution discharged from the plurality of inspection chambers flows, wherein the plurality of resistance channels may be respectively connected to the plurality of inspection chambers to allow gas inside the inspection chambers to be discharged to the outside, and a second resistance value which is the sum of the resistance values of the plurality of resistance channels may be greater than a first resistance value which is the sum of the resistance value of the supply channel and the resistance values of the plurality of inspection chambers.

Furthermore, the second resistance value may be 5 times greater than the first resistance value or is 5 times the first resistance value.

Furthermore, the second resistance value may be 20 times greater than the first resistance value or is 20 times the first resistance value.

Furthermore, the supply channel may include: a main channel; and a dispensing channel branching off from the main channel to provide a passage for supplying the reaction solution to the plurality of inspection chambers.

Furthermore, an end reservoir communicating with an outside of the plurality of resistance channels may be formed at an end of the each of the plurality of resistance channels to prevent the reaction solution from leaking to the outside when the reaction solution exceeds a capacity of the resistance channel.

Furthermore, each resistance channel may be formed to have a predefined cross-section in a direction perpendicular to a longitudinal direction of the each resistance channel, each inspection chamber may be formed to have a predefined cross-section in a direction perpendicular to a longitudinal direction of the inspection chamber, and an area of the cross-section of each resistance channels may be smaller than an area of the cross-section of each inspection chambers.

Furthermore, the plurality of resistance channels may comprise a plurality of first resistance channels and second resistance channels, and the resistance value of each first resistance channel may be different from the resistance value of each second resistance channel.

Furthermore, an analyte inspection apparatus may comprise: an injection device provided with an injection port for discharging the reaction solution to the outside; and a cartridge according to any one of claims 1 to 7, wherein the injection device may communicate with the main channel.

### EFFECT OF INVENTION

Embodiments of the present disclosure can uniformly dispense a reaction solution into a plurality of inspection chambers by arranging resistance channels at the rear ends of the first inspection chambers and second inspection chambers.

Furthermore, a sample can be uniformly filled into the plurality of inspection chambers regardless of the flow rate or hydraulic pressure within the supply channel.

Furthermore, by eliminating unnecessary channel structures or external devices, a desired reaction can be performed with a minimum amount of sample and cost.

### BRIEF DESCRIPTION OF THE DRAWINGS

FIG. 1 is a perspective view of an analyte inspection apparatus according to an embodiment of the present disclosure.
FIG. 2 is an exploded perspective view of the analyte inspection apparatus according to an embodiment of the present disclosure, as viewed from above.
FIG. 3 is an exploded perspective view of an injection device, a cartridge, and a cover of the analyte inspection apparatus according to an embodiment of the present disclosure, as viewed from below.
FIG. 4 is a top view of the cartridge of the analyte inspection apparatus according to an embodiment of the present disclosure.
FIG. 5 is a bottom view of the cartridge of the analyte inspection apparatus according to an embodiment of the present disclosure.
FIG. 6 is a bottom view of the cartridge and the cover of the analyte inspection apparatus according to an embodiment of the present disclosure.
FIG. 7 is a diagram illustrating the overflow volume of the reaction solution according to the ratio of the first resistance value to the second resistance value in the analyte inspection apparatus according to an embodiment of the present disclosure.

### DETAILED DESCRIPTION OF THE INVENTION

Hereinafter, specific embodiments for implementing the technical spirit of the present disclosure will be described in detail with reference to the drawings.

Furthermore, in describing the present disclosure, detailed descriptions of related known configurations or functions will be omitted if it is determined that they may obscure the gist of the present disclosure.

Furthermore, it should be understood that when an element is referred to as being 'connected', 'supplied', or 'flowing' to another element, it may be directly connected, supplied, or flow to the other element, but other elements may exist in between.

The terminology used herein is for the purpose of describing particular embodiments only and is not intended to be limiting of the present disclosure. The singular forms are intended to include the plural forms as well, unless the context clearly indicates otherwise.

Furthermore, it is noted in advance that expressions such as upper side, lower side, and side surface in this specification are described based on the illustration in the drawings, and may be expressed differently if the direction of the subject is changed. For the same reason, some components in the accompanying drawings are exaggerated, omitted, or schematically shown, and the size of each component does not entirely reflect its actual size.

Furthermore, terms including ordinal numbers, such as first and second, may be used to describe various components, but the components are not limited by these terms. These terms are only used to distinguish one component from another.

The meaning of "comprising" as used in the specification specifies a particular characteristic, region, integer, step, operation, element, and/or component, and does not exclude the presence or addition of another particular characteristic, region, integer, step, operation, element, component, and/or group.

Furthermore, it is noted in advance that expressions such as top, side, and bottom in this specification are described based on the illustration in the drawings, and may be expressed differently if the direction of the subject is changed.

Hereinafter, a specific configuration of an analyte inspection apparatus 1 according to an embodiment of the present disclosure will be described with reference to the drawings.

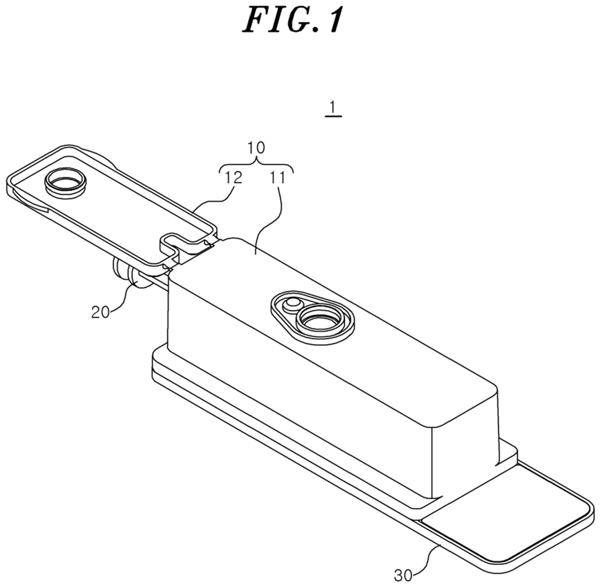

Referring to FIGS. 1 to 3, in this embodiment, the analyte inspection apparatus 1 may be used to perform a polymerase chain reaction (PCR) on a reaction solution containing a sample derived from a living body or the environment. This analyte inspection apparatus 1 may include a case 10, an injection device 20, and a cartridge 30. Furthermore, the case 10, the injection device 20, and the cartridge 30 of the analyte inspection apparatus 1 may be composed of any one material among plastic, rubber, ceramic, an inorganic compound, and a metal, or a combination thereof.

The case 10, the injection device 20, and the cartridge 30 may be manufactured through processes such as Blow molding, Compression molding, Extrusion molding, Injection molding, Laminating, Reaction injection molding, Matrix molding, Rotational molding, Spin casting, Transfer molding, Thermoforming, and 3D printing. The case 10, the injection device 20, and the cartridge 30 may be mass-manufactured by a pre-equipped automated facility, and may be manufactured for multiple uses or single use. Furthermore, the case 10, the injection device 20, and the cartridge 30 may be manufactured separately and then assembled to form a single analyte inspection apparatus 1.

The case 10 may accommodate at least a portion of the injection device 20 and the cartridge 30. This case 10 may be supported by a base 100 of the cartridge 30, which will be described later. This case 10 may include a case cover part 11 that accommodates a part of the injection device 20 and the cartridge 30, and a lid part 12 to open and close an injection port 21 of the injection device 20, which will be described later.

The injection device 20 may introduce the reaction solution into a supply channel 300 of the cartridge 30, which will be described later. An accommodation space in which the reaction solution may be accommodated may be formed inside this injection device 20. Meanwhile, the reaction solution introduced into the supply channel 300 by the injection device 20 may, for example, include a liquid, a solid, or a mixture thereof, including some or all of cells, viruses, tissues, exosomes, proteins, nucleic acids, antigens, and antibodies. This injection device 20 may include an injection port 21, an outlet 22, an exchange port 23, a piston 24, and an injection device body 25.

A sample may be injected from the outside into the accommodation space within the injection device 20 through the injection port 21. Furthermore, the injection port 21 may be selectively opened and closed by the lid part 12 of the case 10. This injection port 21 may be formed on the injection device body 25 to be perpendicular to a direction in which the piston 24 is inserted.

The outlet 22 may provide a passage for guiding the reaction solution within the injection device 20 to flow to an inlet 311 of a main channel 310, which will be described later, of the supply channel 300. This outlet 22 may be detachably connected to an upper end of the inlet 311 of the main channel 310.

The exchange port 23 may provide a passage for the reaction solution within the injection device 20 to flow to a communication port 510 of an exchange channel 500, which will be described later. This exchange port 23 may be detachably connected to an upper end of the communication port 510 of the exchange channel 500.

The piston 24 may reciprocate within the injection device 20. When the piston 24 is moved to be inserted into the interior of the injection device 20, the reaction solution may flow through the outlet 22 to the supply channel 300 of the cartridge 30.

The injection device body 25 may provide an accommodation space, which is a space where the sample introduced from the outside is accommodated. The injection port 21, the outlet 22, and the exchange port 23 may be formed on this injection device body 25.

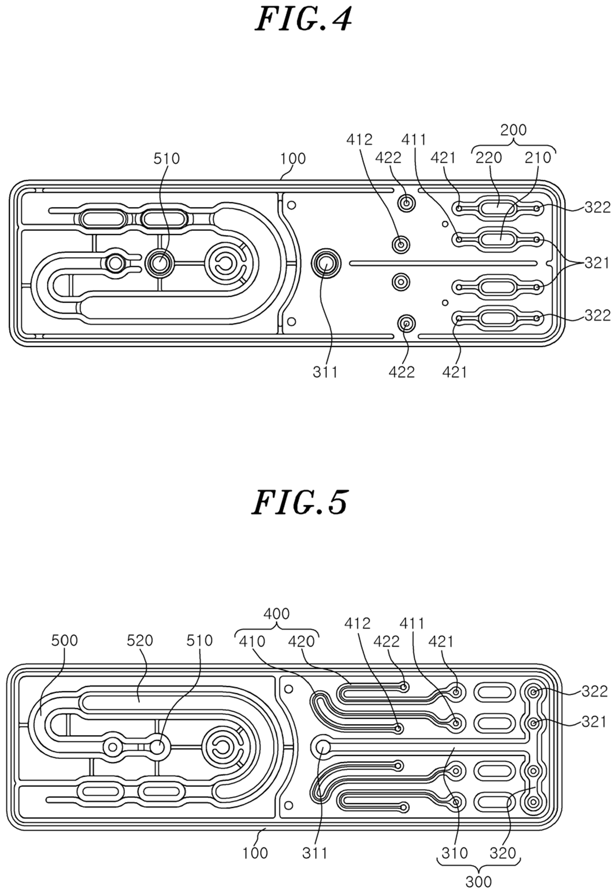

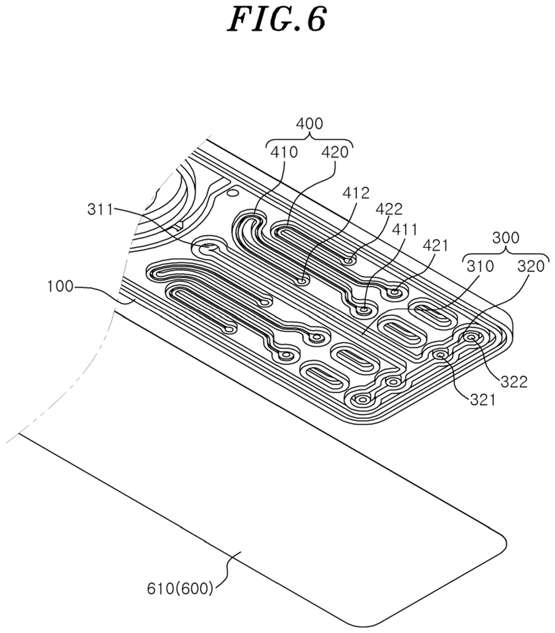

Referring to FIGS. 4 to 6, the cartridge 30 may provide a channel for the reaction solution to flow. A polymerase chain reaction (PCR) of the reaction solution may be conducted in this cartridge 30. Furthermore, the cartridge 30 may support the case 10 and the injection device 20. Furthermore, the cartridge 30 may include a base 100, an inspection chamber 200, a supply channel 300, a resistance channel 400, an exchange channel 500, and a cover 600.

The base 100 may form the body of the cartridge 30. The inspection chamber 200, the supply channel 300, the resistance channel 400, the exchange channel 500, and the cover 600 may be disposed on this base 100.

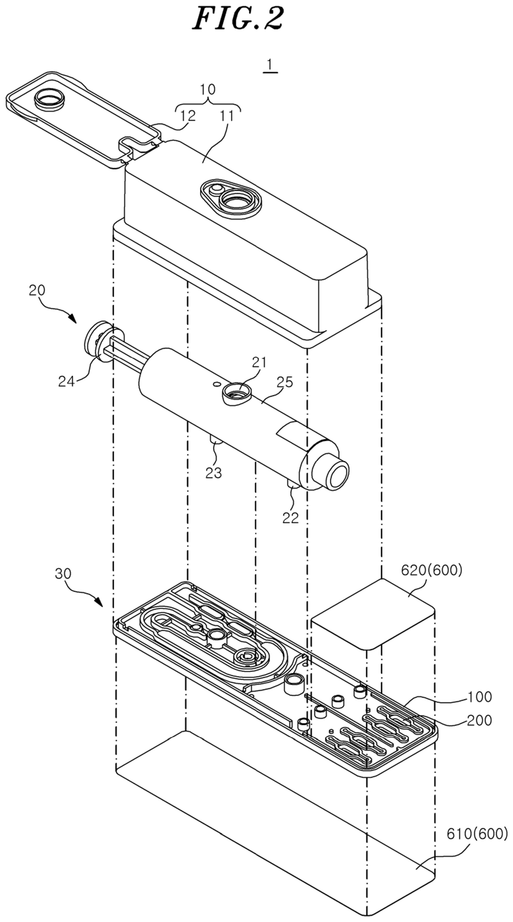

The inspection chamber 200 may provide a space where the reaction solution is accommodated. This inspection chamber 200 may be supplied with the reaction solution through a first chamber inlet 321 and a second chamber inlet 322 of a dispensing channel 320, which will be described later, of the supply channel 300. Furthermore, when the amount of the reaction solution accommodated in the inspection chamber 200 exceeds the accommodation capacity of the inspection chamber 200, the excess reaction solution may be discharged to the resistance channel 400 through a first resistance channel inlet 411 and a second resistance channel inlet 421, which will be described later, of the resistance channel 400. A plurality of inspection chambers 200 may be provided. Meanwhile, a second cover 620, which will be described later, of a cover 600 attached to the other side (the upper side surface in FIG. 2) of the inspection chamber 200 may prevent the reaction solution from being discharged to the outside of the inspection chamber 200. This inspection chamber 200 may have a predefined resistance value, and the resistance value according to the shape of the area of the cross-section (circle, rectangle, square, of the inspection chamber 200 may be calculated according to the following Equation 1, which considers the length and the area of the cross-section. Furthermore, the inspection chamber 200 may include a first inspection chamber 210 and a second inspection chamber 220.

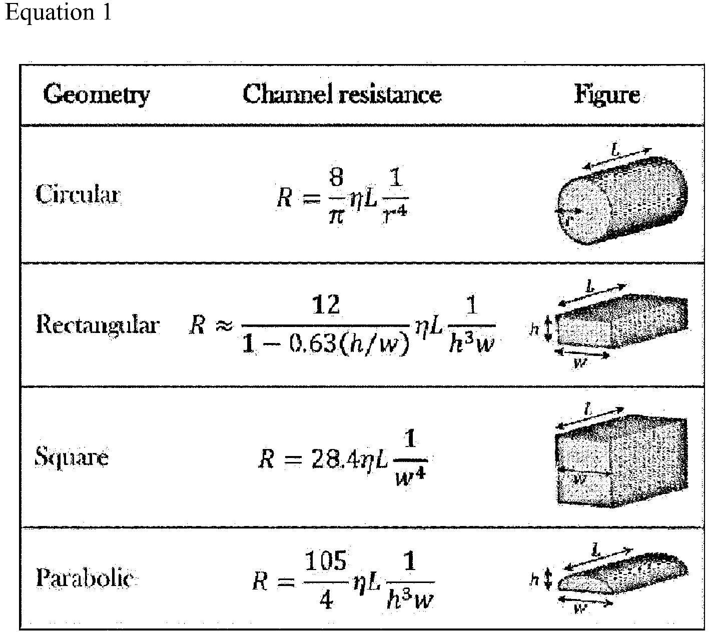

The first inspection chamber 210 may be supplied with the reaction solution through the first chamber inlet 321 of the dispensing channel 320, and the reaction solution exceeding the accommodation capacity of the first inspection chamber 210 may be discharged to a first resistance channel 410 through the first resistance channel inlet 411 of the first resistance channel 410.

The second inspection chamber 220 may be supplied with the reaction solution through the second chamber inlet 322 of the dispensing channel 320, and the reaction solution exceeding the accommodation capacity of the second inspection chamber 220 may be discharged to a second resistance channel 420 through the second resistance channel inlet 421 of the second resistance channel 420.

The first inspection chamber 210 and the second inspection chamber 220 may be disposed at different distances from the main channel 310 of the supply channel 300. In one embodiment, the first inspection chamber 210 may be disposed more adjacent to the main channel 310 than the second inspection chamber 220. In other words, the second inspection chamber 220 may be arranged to be spaced farther apart from the main channel 310 than the first inspection chamber 210. Here, the distance may be a distance spaced apart in a direction in which the main channel 310 extends or in a direction perpendicular thereto. Meanwhile, even if the first inspection chamber 210 and the second inspection chamber 220 may be disposed at different distances from the main channel 310, the reaction solution may be uniformly dispensed into the first inspection chamber 210 and the second inspection chamber 220 by the resistance channels 400, a detailed description of which will follow later.

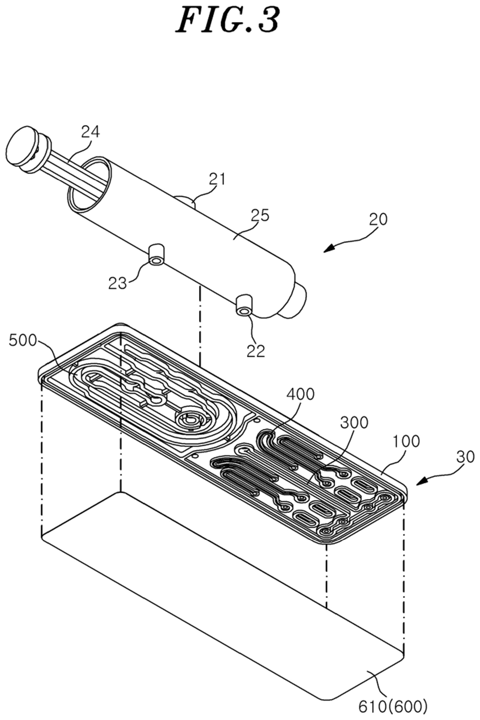

The supply channel 300 may provide a passage for the reaction solution supplied from an external source to flow to the plurality of inspection chambers 200. This supply channel 300 may be disposed on one side surface (the lower side surface in FIG. 3) of the base 100, and the reaction solution may flow within the supply channel 300 without being discharged to the outside by a first cover 610, which will be described later, of the cover 600 attached to one side of the base 100. This supply channel 300 may have a predefined resistance value, and the resistance value according to the shape of the supply channel 300 may be calculated according to the above Equation 1, which considers the length and the area of the cross-section. Furthermore, the total resistance value, which is the sum of the resistance value of the supply channel 300 and the resistance values of the plurality of inspection chambers 200, may be referred to as a first resistance value. The supply channel 300 may include the main channel 310 and the dispensing channel 320.

The main channel 310 may provide a path for the reaction solution supplied from the injection device 20 to flow to the dispensing channel 320. An inlet 311 may be formed on one side of the main channel 310, and the inlet 311 may be in communication with the outlet 22 of the injection device 20 so that the reaction solution within the injection device 20 may flow to the main channel 310 through the outlet 22 and the inlet 311. The other side of the main channel 310 may be in communication with the dispensing channel 320, and the reaction solution that flows into the main channel 310 may flow to the dispensing channel 320.

The dispensing channel 320 may branch off from the main channel 310 to provide a passage for supplying the reaction solution to the plurality of inspection chambers 200. The first chamber inlet 321 and the second chamber inlet 322 may be formed in this dispensing channel 320. Furthermore, at least a portion of the dispensing channel 320 may be connected to perpendicularly with at least one of the plurality of inspection chambers 200, thereby supplying a sample to the at least one of the plurality of inspection chambers 200.

The first chamber inlet 321 may be connected to the first inspection chamber 210. The reaction solution may flow into the first inspection chamber 210 through the first chamber inlet 321. This first chamber inlet 321 may be disposed more adjacent to the main channel 310 than the second chamber inlet 322.

The second chamber inlet 322 may be connected to the second inspection chamber 220. The reaction solution may flow into the second inspection chamber 220 through the second chamber inlet 322. This second chamber inlet 322 may be arranged to be spaced farther apart from the main channel 310 than the first chamber inlet 321. Here, the distance may be a distance spaced apart in a direction in which the main channel 310 extends or in a direction perpendicular thereto.

Furthermore, the flow path length from the end of the main channel 310 to the second chamber inlet 322 may be longer than the flow path length from the end of the main channel 310 to the first chamber inlet 321. Here, the flow path length may be the longitudinal length of the dispensing channel 320 that extends from the end of the main channel 310 to the first chamber inlet 321 or the second chamber inlet 322. In one embodiment, the flow path length may be the extension length of the dispensing channel 320 when the dispensing channel 320 extending from the end of the main channel 310 to the first chamber inlet 321 or the second chamber inlet 322 is formed in a straight or curved shape.

Meanwhile, the specifications of the structures may be determined based on the ratio of the resistance applied to each of the inspection chamber 200, the supply channel 300, and the resistance channel 400, and a detailed description thereof will follow later.

The resistance channel 400 may allow the reaction solution discharged from the inspection chamber 200 to flow. In other words, this resistance channel 400 may provide a passage through which the reaction solution exceeding the capacity of the inspection chamber 200 may flow. Furthermore, the resistance channel 400 may be connected to the inspection chamber 200 and may provide a passage for gas inside the inspection chamber 200 to be discharged to the outside as the inspection chamber 200 is filled with the reaction solution. A plurality of resistance channels 400 may be provided. The resistance channel 400 may extend relatively long, and the resistance channel 400 may be formed to have a predefined cross-section in a direction perpendicular to the longitudinal direction of the each resistance channel 400. Furthermore, the area of the cross-section of each resistance channels 400 may be formed to be relatively small. In one embodiment, the area of the cross-section of each resistance channels 400 may be relatively smaller than the area of the cross-section of the supply channel 300 and the inspection chamber 200. Each of these plurality of resistance channels 400 may have its own resistance value, and the total resistance value, which is the sum of the resistance values of the plurality of resistance channels 400, may be referred to as a second resistance value. Meanwhile, this second resistance value may be different from the first resistance value. For example, the second resistance value may be greater than the first resistance value. In a detailed embodiment, the second resistance value may be 5 times greater than the first resistance value or may be 5 times the first resistance value, and in another embodiment, the second resistance value may be 20 times greater than the first resistance value or may be 20 times the first resistance value. Furthermore, an end reservoir, which will be described later, may be formed at an end of the resistance channel 400 to prevent the reaction solution from leaking to the outside when the reaction solution exceeds the capacity of the resistance channel 400. The resistance channel 400 may include a first resistance channel 410 and a second resistance channel 420.

The first resistance channel 410 may be connected to be in communication with the first inspection chamber 210 and may provide a passage for the flow of the reaction solution discharged from the first inspection chamber 210. A first resistance channel inlet 411 communicating with the first inspection chamber 210 may be formed on one side of this first resistance channel 410. In one embodiment, when the amount of the reaction solution accommodated in the first inspection chamber 210 exceeds the accommodation capacity of the first inspection chamber 210, the excess reaction solution may be discharged to the first resistance channel 410 through the first resistance channel inlet 411 of the first resistance channel 410. The resistance value of the first resistance channel 410 may be equal to or different from the resistance value of the second resistance channel 420. For example, by configuring the length and the area of cross-section of the first resistance channel 410 to be equal to or different from those of the second resistance channel 420, the resistance value of the first resistance channel 410 and the resistance value of the second resistance channel 420 may be made equal or different.

Furthermore, a first resistance channel outlet 412 communicating with the other side surface (the upper side surface in FIG. 4) of the base 100 may be formed on the other side of the first resistance channel 410. This first resistance channel outlet 412 may be referred to as a first end reservoir. When the reaction solution that flows from the first inspection chamber 210 into the first resistance channel 410 exceeds the accommodation capacity of the first resistance channel 410, the reaction solution may flow to the other side surface of the base 100 through the first end reservoir, thereby preventing the reaction solution from leaking outside the passage of the first resistance channel 410.

The second resistance channel 420 may be connected to be in communication with the second inspection chamber 220 and may provide a passage for the flow of the reaction solution discharged from the second inspection chamber 220. A second resistance channel inlet 421 communicating with the second inspection chamber 220 may be formed on one side of this second resistance channel 420. In one embodiment, when the amount of the reaction solution accommodated in the second inspection chamber 220 exceeds the accommodation capacity of the second inspection chamber 220, the excess reaction solution may be discharged to the second resistance channel 420 through the second resistance channel inlet 421 of the second resistance channel 420. A second resistance channel outlet 422 communicating with the other side surface (the upper side surface in FIG. 4) of the base 100 may be formed on the other side of the second resistance channel 420. This second resistance channel outlet 422 may be referred to as a second end reservoir. When the reaction solution that flows from the second inspection chamber 220 into the second resistance channel 420 exceeds the accommodation capacity of the second resistance channel 420, the reaction solution may flow to the other side surface of the base 100 through the second end reservoir, thereby preventing the reaction solution from leaking outside the passage of the second resistance channel 420.

The exchange channel 500 may provide a passage for the flow of the sample introduced from the injection device 20. A communication port 510 may be formed in this exchange channel 500, and the communication port 510 may be detachably connected to the exchange port 23 of the injection device 20. The sample in the injection device 20 may flow into the exchange channel 500 through the communication port 510 connected to the exchange port 23. This exchange channel 500 may be used to extract the analyte present in the sample by sequentially contacting and mixing different solutions with the sample. Furthermore, the exchange channel 500 may be connected to an expansion channel 520, which is a passage through which the sample introduced from the communication port 510 flows. This expansion channel 520 may be formed to be wider than the exchange channel 500.

The cover 600 may be attached to the base 100 to prevent the reaction solution from being discharged outside the passage. This cover 600 may be a film formed of a flexible material. In one embodiment, the cover 600 may include a first cover 610 and a second cover 620.

The first cover 610 may be attached to one side surface (the lower side surface in FIG. 3) of the base 100. In one embodiment, the first cover 610 may be attached to one end of the supply channel 300 so that the reaction solution may flow within the main channel 310 and the dispensing channel 320 of the supply channel 300 without being discharged to the outside.

The second cover 620 may be attached to the other side surface of the base 100. In one embodiment, the second cover 620 may be attached to the other end of the inspection chamber 200 to prevent the reaction solution from being discharged outside the inspection chamber 200.

Hereinafter, the operation and effects of the analyte inspection apparatus 1 having the above-described configuration will be described.

The reaction solution may flow into the main channel 310 through the inlet 311 of the main channel 310 connected to the outlet 22 of the injection device 20. The reaction solution that flows into the main channel 310 may flow to the dispensing channel 320, and the reaction solution may flow into the first inspection chamber 210 and the second inspection chamber 220 through the first chamber inlet 321 and the second chamber inlet 322 of the dispensing channel 320. In one embodiment, the flow path length from the end of the main channel 310 to the second chamber inlet 322 may be longer than the flow path length from the end of the main channel 310 to the first chamber inlet 321, and in this case, a slight resistance difference may occur between the first and second inspection chambers 210, 220 connected to the first and second chamber inlets 321, 322.

In this case, the length and the area of the cross-section may be formed differently so that a difference arises between the resistance value of the first resistance channel 410 and the resistance value of the second resistance channel 420, allowing the uniform dispensing of the reaction solution to occur more accurately. That is, even if the first inspection chamber 210 and the second inspection chamber 220 are disposed at different distances from the main channel 310, the reaction solution may be uniformly dispensed into the first inspection chamber 210 and the second inspection chamber 220 due to the resistance value of the resistance channel 400.

Furthermore, when the reaction solution is supplied to the plurality of inspection chambers 200, this reaction solution may push out the gas that was present in the inspection chamber 200 and fill the inspection chamber 200 where the gas was accommodated. The gas may be discharged to the resistance channel outlets 412, 422 by passing through the plurality of resistance channels 400 via the first resistance channel inlet 411 and the second resistance channel inlet 421.

In one embodiment, the reaction solution exceeding the accommodation capacity of the first inspection chamber 210 and the second inspection chamber 220 may be discharged to the first resistance channel 410 and the second resistance channel 420, respectively, and the areas of the cross-section of the first resistance channel 410 and the second resistance channel 420 may be formed to be relatively smaller than the areas of the cross-section of the first inspection chamber 210 and the second inspection chamber 220, so the reaction solution flowing within the first resistance channel 410 and the second resistance channel 420 may flow at a relatively low speed. Accordingly, a predefined resistance may be applied to the reaction solution that is discharged from the first inspection chamber 210 and the second inspection chamber 220 and may flow into the first resistance channel inlet 411 and the second resistance channel inlet 421 of the first resistance channel 410 and the second resistance channel 420. Due to the resistance of such first resistance channel 410 and second resistance channel 420, the reaction solution flowing from the dispensing channel 320 into the first inspection chamber 210 and the second inspection chamber 220 may be uniformly dispensed within the first inspection chamber 210 and the second inspection chamber 220.

The effect of uniform dispensing of the reaction solution may be enhanced as the difference increases between the first resistance value, which is the total resistance value of the supply channel 300 and each of the inspection chambers 200, and the second resistance value, which is the total resistance value of the plurality of resistance channels 400. Furthermore, as this resistance difference increases, the volume of the reaction solution flowing into the resistance channel 400 after filling the inspection chamber 200 may decrease, so the amount of sample required to uniformly dispense the reaction solution into each inspection chamber 200 may also decreases, and accordingly, the cost of reagents introduced into the PCR reaction may also be reduced.

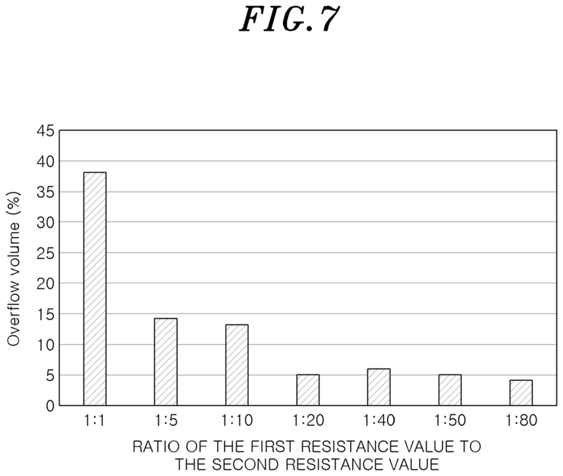

Referring to FIG. 7, to confirm the effect of uniform dispensing of the reaction solution injected into the inspection chamber 200, the ratio of the volume of the reaction solution that flowed into each resistance channel 400 relative to the accommodation capacity of the inspection chamber 200 (overflow volume (%)) was measured while varying the ratio of the first resistance value to the second resistance value.

As a result of the measurement, when the ratio of the first resistance value to the second resistance value was 1:1, a volume of the reaction solution corresponding to about 38% of the accommodation capacity of the inspection chamber 200 flowed into the resistance channel 400. In other words, when the ratio of the first resistance value to the second resistance value was 1:1, about 38% of the reaction solution was lost and thus not used for the inspection, and for effective inspection performance, the cartridge 30 may require a resistance channel 400 having a volume corresponding to about 38% of the accommodation capacity of the inspection chamber 200.

However, when the ratio of the first resistance value to the second resistance value was 1:5, a volume of the reaction solution corresponding to less than about 15% of the accommodation capacity of the inspection chamber 200 flowed into the resistance channel 400. In other words, when the ratio of the first resistance value to the second resistance value was 1:5, only about 15% of the reaction solution was lost, which may be considered a significant level of loss, and the space occupied by the resistance channel 400 in the cartridge 30 may be optimized.

Furthermore, when the ratio of the first resistance value to the second resistance value was 1:20, a volume of the reaction solution corresponding to less than about 6% of the accommodation capacity of the inspection chamber 200 flowed into the resistance channel 400, so only about 6% of the reaction solution may be lost.

In other words, due to the resistance of the first resistance channel 410 and the second resistance channel 420, the first inspection chamber 210 and the second inspection chamber 220 may be filled with a uniform, fixed amount of the reaction solution, and then the reaction solution exceeding the capacity of the first inspection chamber 210 and the second inspection chamber 220 may flow to the resistance channel 400.

Although the embodiments of the present disclosure have been described as specific embodiments, these are merely examples, and the present disclosure is not limited thereto and should be interpreted as having the broadest scope according to the technical spirit disclosed in this specification. A person skilled in the art may implement patterns of unstated shapes by combining/substituting the disclosed embodiments, but this also does not depart from the scope of the present disclosure. In addition, a person skilled in the art may easily change or modify the disclosed embodiments based on this specification, and it is clear that such changes or modifications also fall within the scope of rights of the present disclosure.

## Claims

1. A cartridge, comprising:
a plurality of inspection chambers to provide a space in which a reaction solution is accommodated;
a supply channel to provide a passage for the reaction solution supplied from an external source to flow to the plurality of inspection chambers; and
a plurality of resistance channels through which the reaction solution discharged from the plurality of inspection chambers flows,
wherein the plurality of resistance channels are respectively connected to the plurality of inspection chambers to allow gas inside the plurality of inspection chambers to be discharged to the outside, and a second resistance value which is a sum of resistance values of the plurality of resistance channels is greater than a first resistance value which is a sum of a resistance value of the supply channel and resistance values of the plurality of inspection chambers.

2. The cartridge of claim 1, wherein the second resistance value is 5 times greater than the first resistance value or is 5 times the first resistance value.

3. The cartridge of claim 1, wherein the second resistance value is 20 times greater than the first resistance value or is 20 times the first resistance value.

4. The cartridge of claim 1, wherein the supply channel includes:
a main channel; and
a dispensing channel branching off from the main channel to provide a passage for supplying the reaction solution to the plurality of inspection chambers.

5. The cartridge of claim 4, wherein at least a portion of the dispensing channel is perpendicular connected to at least one of the plurality of inspection chambers to supply a sample to the at least one of the plurality of inspection chambers.

6. The cartridge of claim 1, wherein an end reservoir communicating with an outside of the plurality of resistance channels is formed at an end of each of the plurality of resistance channels to prevent the reaction solution from leaking to the outside when the reaction solution exceeds a capacity of the resistance channel.

7. The cartridge of claim 1, wherein each resistance channel is formed to have a predefined cross-section in a direction perpendicular to a longitudinal direction of the each resistance channel, each inspection chamber is formed to have a predefined cross-section in a direction perpendicular to a longitudinal direction of the inspection chamber, and an area of the cross-section of each resistance channels is smaller than an area of the cross-section of each inspection chambers.

8. The cartridge of claim 1, wherein the plurality of resistance channels comprise a plurality of first resistance channels and second resistance channels, and a resistance value of each first resistance channel is different from a resistance value of each second resistance channel.

9. An analyte inspection apparatus, comprising:
an injection device provided with an injection port for discharging the reaction solution to the outside; and
a cartridge according to any one of claims 1 to 8,
wherein the injection device communicates with the main channel included in the supply channel.
